(19) Europäisches Patentamt
European Patent Office
Office européen des brevets

(11) **EP 4 202 266 B1**

(12) **EUROPÄISCHE PATENTSCHRIFT**

(45) Veröffentlichungstag und Bekanntmachung des Hinweises auf die Patenterteilung:
**29.01.2025 Patentblatt 2025/05**

(21) Anmeldenummer: **22215080.7**

(22) Anmeldetag: **20.12.2022**

(51) Internationale Patentklassifikation (IPC):
*F16K 1/52* (2006.01)  *F16K 3/24* (2006.01)
*F16K 3/32* (2006.01)  *F16K 3/34* (2006.01)
*F24D 19/10* (2006.01)  *F24H 15/31* (2022.01)
*G05D 7/01* (2006.01)

(52) Gemeinsame Patentklassifikation (CPC):
**F16K 3/24; F16K 1/526; F16K 3/32; F16K 3/34;**
**F24D 19/1015; F24H 15/31; G05D 7/0106;**
F16K 2200/50

(54) **VENTIL ZUM STEUERN EINES FLUIDSTROMS UND DESSEN VERWENDUNG, SOWIE VENTILEINSATZ FÜR EIN VENTILGEHÄUSE ZUR STEUERUNG EINES FLUIDSTROMS**

VALVE FOR CONTROLLING A FLUID FLOW AND USE THEREOF, AND VALVE INSERT FOR A VALVE HOUSING FOR CONTROLLING A FLUID FLOW

SOUPAPE DE COMMANDE D'UN FLUX DE FLUIDE ET SON UTILISATION, ET INSERT DE SOUPAPE POUR UN BOÎTIER DE SOUPAPE POUR COMMANDER UN FLUX DE FLUIDE

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität: **23.12.2021 DE 102021134501**

(43) Veröffentlichungstag der Anmeldung:
**28.06.2023 Patentblatt 2023/26**

(73) Patentinhaber: **Meibes System-Technik GmbH**
**04827 Gerichshain (DE)**

(72) Erfinder:
• **KLEIN, Jens**
**04827 Gerichshain (DE)**
• **BLOCK, Sebastian**
**04827 Gerichshain (DE)**
• **SCHRAMEDEI, Ron**
**04827 Gerichshain (DE)**

(74) Vertreter: **Kailuweit & Uhlemann Patentanwälte Partnerschaft mbB**
**Bamberger Straße 49**
**01187 Dresden (DE)**

(56) Entgegenhaltungen:
EP-A1- 0 119 503       EP-A1- 3 627 015
EP-A2- 1 180 624       DE-A1- 2 756 118
DE-A1- 4 325 737       US-A1- 2014 191 148
US-A1- 2019 195 046

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Ventil zur Steuerung eines Fluidstroms und dessen Verwendung, sowie einen Ventileinsatz für ein Ventilgehäuse zur Steuerung eines Fluidstroms.

Ventile zum Steuern eines Fluidstroms werden in vielen Bereichen, bspw. in Heiz- und/oder Kühlsystemen eingesetzt und weisen üblicherweise veränderbar ausgebildete Öffnungen auf.

EP 3 163 135 A1 offenbart ein Steuerventil mit einem Ventilkörper und einem Ventileinsatz zur Steuerung eines Fluidstroms. Dabei ist der Ventileinsatz derart ausgebildet, um Fertigungstoleranzen der Ventilkomponenten, wie bspw. des Ventilkegels, auszugleichen. Der Ventileinsatz weist dazu mindestens zwei Abschnitte auf, die zueinander beweglich sind und bspw. den Ventilkegel umschließen, um Fertigungstoleranzen ausgleichen.

EP 3 163 136 A1 zeigt ein Steuerventil, dass mindestens zwei unterschiedliche Ventilkennlinien aufweist und damit besser an eine Hubbegrenzung angepasst ist Dazu weist das Steuerventil eine Verschlussanordnung mit einem geschlossenen Zustand, in dem kein Fluid durch die Kammer fließt, einen ersten offenen Zustand, in dem Fluid durch die Kammer fließt, und mindestens einen zweiten offenen Zustand, in dem ein geringerer Fluidstrom durch die Kammer fließt als im ersten offenen Zustand. Zwischen dem geschlossenen und dem zweiten offenen Zustand fließt das Fluid entsprechend einer ersten Ventilkennlinie und zwischen dem zweiten und dem ersten offenen Zustand entsprechend einer zweiten, von der ersten verschiedenen Ventilkennlinie durch das Ventil. Nachteilig bei diesem Ventil ist, dass durch die Hubbegrenzung die Regelgenauigkeit des Ventils abnimmt.

EP 2 089 649 B1 offenbart einen verstellbaren Reglereinsatz für ein Ventilgehäuse. Der Reglereinsatz weist zwei Einlauföffnungen und eine Auslauföffnung auf, die gegeneinander abgedichtet sind. Die Größe der Einlauföffnung ist durch die Überlappung einer ersten Aussparung auf einem Außenzylinder und einer zweiten Aussparung auf einem Innenzylinder des Reglereinsatzes veränderbar. Zur Einstellung der Überlappung ist der Innenzylinder drehbar und axial verschiebbar.

EP 1 896 755 B1 zeigt ein Steuerventil mit voreinstellbarem Durchfluss. Dazu weist das Steuerventil eine Anordnung zur Regulierung des Durchflusses auf, die zwei zusammenwirkende Ventilelemente umfasst. Die Ventilelemente sind als konzentrische Ringe ausgebildet und weisen jeweils eine Aussparung auf. Das innere Ventilelement ist drehbar und axial verschiebbar, um die Überlappung der Aussparungen in den beiden Ventilelementen zu variieren.

EP 2 338 093 B1 offenbart ein Steuerventil, bei dem eine Reduzierung der Durchflussöffnung mittels eines Aktuators erzielt wird. Dazu umfasst das Steuerventil eine Durchflusssteueranordnung mit einem äußeren und einem inneren Zylinderschalenelement, die korrespondierende Öffnungen aufweisen. Eine Verringerung der Durchflussöffnung wird durch eine Verdrehung des inneren Zylinderschalenelements und eine axiale Beweglichkeit beider Zylinderschalenelemente erreicht.

WO 01 / 88418 A1 offenbart ein Durchflussventil mit einstellbarem Voreinstellungsglied und Membran zur Regulierung und/oder Einstellung von Flüssigkeitsmengen in Anlagen mit flüssigkeitsführenden Medien zur Begrenzung des Mediums auf eine voreingestellte Maximalmenge Menge, unabhängig von einem über das Ventil wirkenden Differenzdruck, wobei die Membran durch Aufrollen auf eine Wand eine Anzahl von Öffnungen in der Wand öffnetbzw. verschließt, dadurch gekennzeichnet dass die Öffnungen vorzugsweise kleiner sind als ein halber Teil derjenigen Ausdehnung die durch das Abrollen der Membran an der Wand abgedeckt wird.

EP 3 627 015 A1 offenbart ein Ventil und einen Ventileinsatz gemäß den Oberbegriffen der Ansprüche 1 und 6.

Aufgabe der Erfindung ist es, ein Ventil zum Steuern eines Fluidstroms anzugeben, das eine gleichbleibende, gleichprozentige Ventilkennlinie unabhängig von einem voreingestellten Maximalwert der Durchflussmenge aufweist.

Die Aufgabe wird gelöst durch ein Ventil mit den Merkmalen des Anspruchs 1. Weiterhin wird die Aufgabe gelöst durch einen Ventileinsatz mit den Merkmalen des Anspruchs 6 und ein Verfahren zum Betrieb eines Ventils gemäß den Merkmalen des Anspruchs 7. Bevorzugte Weiterbildungen der Erfindung sind Gegenstand von Unteransprüchen.

Erfindungsgemäß umfasst ein Ventil zum Steuern eines Fluidstroms mindestens ein Ventilgehäuse mit mindestens einer Einlass- und einer Auslassseite, und einen Ventileinsatz zur Regelung des Fluidstroms zwischen der Einlass- und der Auslassseite, der innerhalb des Ventilgehäuses angeordnet ist. Dabei umfasst erfindungsgemäß der Ventileinsatz mindestens ein erstes als Hohlkörper ausgebildetes Element und ein zweites Element wobei das zweite Element innerhalb des ersten hohlkörperförmigen Elements angeordnet ist. Weiterhin erfindungsgemäß ist der Ventileinsatz derart innerhalb des Ventilgehäuses angeordnet, so dass das erste Element im Ventilgehäuse axial fixiert und das zweite Element im Ventilgehäuse verdrehsicher angeordnet ist. Erfindungsgemäß weist das erste Element mindestens eine Öffnung entlang des Umfangs des ersten Elements zum Durchleiten des Fluidstroms auf und ist gegenüber dem zweiten Element verdrehbar ausgebildet. Weiterhin erfindungsgemäß ist das zweite Element gegenüber dem ersten Element axial bewegbar ausgebildet.

Vorteilhaft weist ein derartiges Ventil eine gleichbleibende, gleichprozentige Ventilkennlinie unabhängig von einem voreingestellten Maximalwert der Durchflussmenge auf. Weiterhin vorteilhaft wird eine kontinuierliche Steuerung des Volumenstroms eines Fluid über einen Stellbereich des Ventils ermöglicht. Stellbereich im Sinne der Erfindung meint einen Bereich, innerhalb dessen die kontinuierliche Einstellung der Durchflussmenge eines Fluidstroms durch das Ventil zwischen Null und einem voreingestellten Maximalwert der Durchflussmenge möglich ist. Der voreingestellte Maximalwert der Durchflussmenge ist dabei kleiner oder gleich der maximal möglichen Durchflussmenge durch das Ventil ohne voreingestellten Maximalwert, und entspricht 100%. Der Stellbereich entspricht dem Ventilhub des Ventils, somit begrenzt ein voreingestellter Maximalwert der Durchflussmenge den Ventilhub des Ventils. In Ausführungsformen beträgt das Verhältnis der maximalen Durchflussmenge zur minimalen Durchflussmenge des Ventils fünf.

Weiterhin vorteilhaft wird durch das gegenüber dem zweiten Element verdrehbar ausgebildete erste Element die Voreinstellung eines Maximalwertes der Durchflussmenge ermöglicht. Das gegenüber dem ersten Element axial bewegbar und gegenüber dem Ventilgehäuse verdrehsicher ausgebildete zweite Element ermöglicht vorteilhaft die kontinuierliche Einstellung des Durchflusses zwischen Null und dem voreingestellten Maximalwert. Ein derartiges Ventil weist eine bessere Regelgenauigkeit auf, wodurch ein höherer thermischer Komfort bei Verwendung des erfindungsgemäßen Ventils in Heiz- und/oder Kühlsystemen gewährleistet wird. Insbesondere im Teillastbereich weist ein derartiges Ventil eine deutlich verbesserte Regelgenauigkeit durch eine gleichbleibende, gleichprozentige Ventilkennlinie bzw. Ventilcharakteristik auf. Teillastbereich meint dabei einen Arbeitsbereich des Ventils bei einem voreingestellten Maximalwert der Durchflussmenge der kleiner ist als ein Arbeitsbereich des Ventils ohne voreingestellten Maximalwert der Durchflussmenge.

Ein Fluidstrom im Sinne der Erfindung meint einen Strom eines Fluids, wie Flüssigkeiten entsprechend DIN EN 12828. In Ausführungsformen ist das Fluid ausgewählt aus Gasen, Heizungswasser nach VDI 2035 und Wasser-Glykol-Gemischen mit einem maximalen Glykol-Anteil von 50%.

Ein als Hohlkörper ausgebildetes Element im Sinne der Erfindung meint einen axial ausgedehnten Hohlkörper mit einem Querschnitt beliebiger Form, wobei die Querschnittsform des Hohlkörpers derart ausgebildet ist, dass das zweite Element innerhalb des Hohlkörpers angeordnet ist. Der Querschnitt des Hohlkörpers meint eine Fläche senkrecht zur axialen Ausdehnung des Hohlkörpers. In Ausführungsformen weist der Querschnitt eine elliptische, kreisförmige oder vieleckige Form auf. In weiteren Ausführungsformen können die Abmessungen des Querschnitts entlang der axialen Ausdehnung des Hohlkörpers variieren. Im Falle eines Hohlzylinders kann somit der Innen- bzw. Außendurchmesser des Hohlzylinders entlang seiner axialen Ausdehnung variieren. Ein axial ausgedehnter Hohlkörper weist mindestens eine innere Oberfläche und eine äußere Oberfläche auf, die durch eine Wandstärke des Hohlkörpers voneinander beabstandet sind. Dabei begrenzt die innere Oberfläche des Hohlkörpers das vom Hohlkörper umschlossene Volumen und ist dem zweiten Element zugewandt. Die äußere Oberfläche des Hohlkörpers ist dem Ventilgehäuse zugewandt. In Ausführungsformen variiert die Wandstärke des Hohlkörpers entlang der axialen Ausdehnung des Hohlkörpers.

Der axial ausgedehnte Hohlkörper weist weiterhin mindestens eine Stirnfläche auf, die in einem Winkel zur axialen Ausdehnung des Hohlkörpers ausgerichtet ist, bevorzugtsenkrecht zur axialen Ausdehnung ausgerichtet ist. Ein derartiger Hohlkörper ist einseitig offen. In Ausführungsformen weist die mindestens eine Stirnfläche des axial ausgedehnten Hohlkörpers eine Aussparung zur Durchführung einer Spindel auf. Die Spindel kann vorteilhaft mit einem Stellantrieb verbunden werden, um die axiale Bewegbarkeit des zweiten Elements gegenüber dem ersten Element zu erzielen. Die Spindel bildet in Ausführungsformen die Achse des Ventils, entlang derer das axial ausgedehnte erste und zweite Element ausgerichtet sind.

In Ausführungsformen ist das zweite Element als axial ausgedehnter Hohl- oder Vollkörper mit einem Querschnitt beliebiger Form, bevorzugt als axial ausgedehnter Hohlkörper, ausgebildet. Ein axial ausgedehnter Vollkörper mit einem Querschnitt beliebiger Form kann bspw. ein Vollzylinder sein. In weiteren Ausführungsformen können die Abmessungendes Querschnitts des Hohl- oder Vollkörpers entlang der axialen Ausdehnung des HohH oder Vollkörpers variieren. Auch die Wandstärke eines als axial ausgedehnter Hohlkörper ausgebildeten ersten Elements kann entlang der axialen Ausdehnung variieren.

In weiteren Ausführungsformen sind das erste und das zweite Element aus Kunststoff ausgebildet, bevorzugt aus einem verstärkten, bspw. glasfaserverstärkten, Kunststoff.

Axial fixiert im Sinne der Erfindung meint, dass das erste als Hohlkörper ausgebildete Element in seiner axialen Anordnung innerhalb des Ventilgehäuse fixiert ist. Die axiale Anordnung des ersten Elements innerhalb des Ventilgehäuses ist demnach nicht veränderbar.

Verdrehsicher im Sinne der Erfindung meint, dass das zweite Element derart innerhab des Ventilgehäuses angeordnet ist, dass eine Verdrehung des zweiten Elements gegenüber dem Ventilgehäuse nicht möglich ist.

Verdrehbar im Sinne der Erfindung meint, dass eine Verdrehung des ersten Elements gegenüber dem zweiten Element möglich ist. Damit wird die Voreinstellung eines Maximalwertes der Durchflussmenge ermöglicht. In Ausführungsformen ist das erste Element manuell, bspw. mittels eines Maulschlüssels, gegenüber dem zweiten Element verdrehbar ausgebildet. Vorteilhaft wird dadurch die Voreinstellung eines Maximalwertes des Durchflusses durch den Nutzer des Ventils ermöglicht. Weiterhin vorteilhaft ist die Voreinstellung eines Maximalwerts ohne Auseinanderbau des Ventils möglich.

Axial bewegbar im Sinne der Erfindung meint, dass die axiale Anordnung des zweiten, innerhalb des ersten Elements angeordneten, Elements gegenüber dem ersten Element veränderbar ist. Damit wird die kontinuierliche Einstellung des Durchflusses zwischen Null und dem voreingestellten Maximalwert ermöglicht. In Ausführungsformen ist das zweite Element mittels eines Stellantriebs axial gegenüber dem ersten Element bewegbar. Vorteilhaft wird dadurch die automatisierte kontinuierliche Einstellung der Durchflussmenge durch das Ventil zwischen Null und einem voreingestellten Maximalwert der Durchflussmenge ermöglicht. Weiterhin vorteilhaft stellt ein derartiges Ventil einen automatischen Mengenbegrenzer mit einem ZweiWege-Regelventil dar. Dies gewährleistet vorteilhaft eine hohe Ventilautorität und verhindert gleichzeitig zu jeder Zeit eine Überversorgung im Heiz- oder Kühlsystem. Der Stellantrieb kann ein dem Fachmann bekannter Stellantrieb sein, bspw. ein thermoelektrischer oder ein elektromotorischer Stellantrieb. In Ausführungsformen ist das zweite Element gegenüber dem ersten Element ohne Stellantrieb axial bewegbar. Vorteilhaft ist ein derartiges Ventil ein automatischer Mengenbegrenzer und garantiert den vorgesehenen Durchfluss in den Endgeräten, unabhängig von Anforderungen anderer Verbraucher oder Stränge im System, und spart so Energie.

Erfindungsgemäß weist das erste Element mindestens eine Öffnung zur Durchleitung des Fluidstroms auf. In Ausführungsformen kann die mindestens eine Öffnung jegliche Form aufweisen, bspw. eine elliptische, runde oder vieleckige Form. In weiteren Ausführungsformen weist die mindestens eine Öffnung eine vieleckige, bevorzugt eine rechteckige Form auf. Bei einer vieleckigen Form der mindestens einen Öffnung kann es vorteilhaft sein, wenn die Ecken abgerundet ausgebildet sind. In weiteren Ausführungsformen weist das erste als Hohlkörper ausgebildete Element vier Öffnungen auf, wobei die Öffnungen jeweils gleichförmig ausgebildet und entlang einer Höhenlinie des ersten Elements angeordnet sind. Eine Höhenlinie meint dabei eine auf einer Höhe der axialen Ausdehnung des ersten Elements um den Umfang des ersten Elements umlaufende Linie.

In Ausführungsformen umfasst der Ventileinsatz ein erstes als Hohlzylinder ausgebildetes Element und ein zweites Element. Dabei kann in Ausführungsformen der Innen- und/oder Außendurchmesser des Hohlzylinders entlang der axialen Ausdehnung des Hohlzylinders variieren.

In Ausführungsformen weist das Ventilgehäuse weiterhin mindestens einen Messanschluss, bevorzugt mindestens zwei Messanschlüsse, auf. Vorteilhaft wird dadurch eine schnelle Funktionsprüfung, bspw. die Prüfung der Durchflussmenge, ermöglicht.

In bevorzugten Ausführungsformen umfasst das Ventil weiterhin eine Differenzdruckkompensationseinheit. Vorteilhaft werden dadurch Druckschwankungen ausgeglichen, um den der Durchfluss des Fluidstroms konstant zu halten.

In Ausführungsformen weist die Differenzdruckkompensationseinheit mindestens ein als axial ausgedehnter Hohlzylinder ausgebildetes Bauteil, ein erstes und ein zweites becherförmig ausgebildetes Bauteil, eine Feder und eine Membran auf. Vorteilhaft liegt damit bei Anströmung des Ventils an der Unterseite der Membran ein Vordruck $p_1$ an und auf der Oberseite der Membran nach Durchströmung des ersten und zweiten Elements ein statischer Druck $p_2$. In Abhän- gigkeit des Vordrucks $p_1$ erfolgt eine Anpassung des Abstands zwischen dem axial ausgedehnten Hohlzylinder und dem zweiten becherförmig ausgebildeten Bauteil, so dass eine Differenz $p_1$-$p_2$ konstant bleibt.

Die Differenzdruckkompensationseinheit kann in weiteren Ausführungsformen auch entsprechend dem Fachmann bekannten Differenzdruckkompensationseinheiten ausgebildet sein, wie sie bspw. aus EP 2 338 093 B1 oder EP 1 896 755 B1 bekannt sind.

Erfindungsgemäß weist das erste Element auf einem ersten Abschnitt seiner inneren Oberfläche oder das zweite Element auf einem ersten Abschnitt seiner Oberfläche strömungsleitende Strukturen auf. Vorteilhaft wird durch die strömungsleitenden Strukturen eine axiale Durchleitung des Fluidstroms durch das Ventil erzielt. Dabei wird vorteilhaft der Fluidstrom lediglich durch das erste Element geleitet, eine Durchleitung durch das zweite Element erfolgt nicht. Weiterhin vorteilhaft weist ein derartiges Ventil eine gleichprozentig-modifizierte Ventilkennlinie (auch bekannt als EQM-Kennlinie) auf. Dadurch ergibt sich bei Betrachtung des Gesamtsystems aus der Überlagerung einer typischen Kennlinie eines Wärmeübertragers (üblicherweise dargestellt als Wärmeabgabe in % über dem Durchfluss in %) und des erfindungsgemäßen Ventils (üblicherweise dargestellt als Durchfluss in % über dem Ventilhub in %) eine lineare Kennlinie der Regelstrecke, d.h. zwischen der Stellgröße, wie der Steuerspannung eines Stellantriebs, und der Zielgröße, wie der abgegebene Wärmemenge in % über den Durchfluss in %, besteht ein einfacher, linearer Zusammenhang, wobei im gesamten Arbeitsbereich näherungsweise dieselbe Regelgenauigkeit herrscht.

Strömungsleitende Strukturen im Sinne der Erfindung meinen jegliche auf und/oder in der inneren Oberfläche des ersten Elements oder der Oberfläche des zweiten Elements angeordnete Strukturen, die geeignet sind, den Fluidstrom zu leiten. Erfindungsgemäß sind die Strukturen auf der inneren Oberfläche des ersten Elements oder der Oberfläche des zweiten Elements eingebrachte Vertiefungen und/oder Erhebungen, bspw. in Form von Einkerbungen. Dabei definieren die eingebrachten Vertiefungen einen Strömungsweg zwischen der inneren Oberfläche des ersten Elements und der Oberfläche des zweiten Elements, entlang dem die axiale Durchströmung des Ventils erfolgt In Ausführungsformen weist der durch die Vertiefungen der strömungsleitenden Strukturen ausgebildete Strömungsweg eine Querschnittsfläche, die durchströmbare Fläche $A_{eff}$ entlang einer Höhenlinie auf, wobei der Durchfluss abhängig von der durchströmbaren Fläche $A_{eff}$ ist. In weiteren Ausführungsformen sind die strömungsleitenden Strukturen derart ausgebildet, dass das Ventil eine EQM-Funktion nach Formel I aufweist

$$\dot{v}(h) = \frac{a_{power}}{\frac{1}{h}-1+a_{power}} \qquad \text{(I)}$$

mit $v(h)$ dem relativen Volumenstrom (oder auch relative Durchflussmenge) als Funktion des relative Hubs $h$ des Ventils, $a_{power}$ einen vom Hub $h$ abhängigen Parameter und dem Hub $h$. $a_{power}$ wird dabei entsprechend Formel II berechnet

$$a_{power} = a_1 + (a_2 - a_1) \times a_{factor} \qquad \text{(II)}$$

mit den Parametern $a_1$, $a_2$ und $a_3$ und dem Wichtungsfaktor $a_{factor}$, wobei $a_{factor}$ entsprechend Formel III darstellbar ist.

$$a_{factor} = h^{a_3} \qquad \text{(III)}$$

In Ausführungsformen sind die Parameter $a_1$, $a_2$ und $a_3$ frei wählbar und sind bevorzugt $a_1 = 0{,}1$, $a_2 = 0{,}5$ und $a_3 = 1{,}4$.

In weiteren Ausführungsformen sind die strömungsleitenden Strukturen derart ausgebildet, dass die durchströmbare Fläche $A_{eff}$ mit steigenden relativen Huh $h$ des Ventils entlang einer axialen Richtung des Ventils zunimmt. Eine derartige Zunahme der durchströmbaren Fläche $A_{eff}$ erfolgt dabei durch Zunahme einer Umfangslänge $u$ der Vertiefungen entlang des Umfangs des ersten oder des zweiten Elements und eines radialen Öffnungsspalts $\Delta r$. Die durchströmbare Fläche $A_{eff}$ ist in Ausführungsformen eine Funktion des Hubs $h$ des Ventils, der Umfangslänge $u$ und des Öffnungsspalts $\Delta r$. In weiteren Ausführungsformen ist die durchströmbare Fläche mindestens einteilig ausgebildet. In Ausführungsformen ist die durchströmbare Fläche der mehrteilig ausgebildet. Dadurch werden vorteilhaft bei jedem eingestellten Maximalwert der Durchflussmenge nahezu gleiche Anströmverhältnisse erzielt.

Eine Umfangslänge $u$ der Vertiefungen meint die Ausdehnung der Vertiefungen entlang des Umfangs des ersten oder zweiten Elements auf einer Höhenlinie.

Ein radialer Öffnungsspalt $\Delta r$ meint dabei einen die Durchströmung des Fluids gewährleistenden Spalt entlang einer radialen Richtung des Ventils zwischen dem ersten und dem zweiten Element, der durch die innere Oberfläche des ersten Elements und die Oberfläche des zweiten Elements entlang einer Höhenlinie begrenzt wird. Die radiale Richtung des Ventils ist dabei senkrecht zur Ventilachse ausgerichtet.

Die Oberfläche des zweiten Elements meint die Oberfläche des zweiten Elements, die im Ventil dem ersten Element zugewandt ist. Ist das zweite Element als Hohlkörper ausgebildet, ist die Oberfläche des zweiten Elements die äußere Oberfläche des zweiten Elements, die im Ventil dem ersten Element zugewandt ist.

In Ausführungsformen weist das erste als Hohlkörper ausgebildete Element in aufeinanderfolgender Anordnung einen ersten, einen zweiten und einen dritten Bereich auf. Der dritte Bereich des ersten Elements weist in Ausführungsformen den ersten Abschnitt der inneren Oberfläche mit den strömungsleitenden Strukturen auf. In weiteren Ausführungsformen weist der erste Bereich eines als axial ausgedehnter Hohlzylinder ausgebildeten ersten Elements einen geringeren Innen- und Außendurchmesser als der zweite und dritte Bereich des als Hohlzylinder ausgebildeten ersten Elements auf.

In weiteren Ausführungsformen weist das zweite Element in aufeinanderfolgender Reihenfolge einen ersten und einen zweiten Teilbereich auf. Der zweite Teilbereich des zweiten Elements weist in Ausführungsformen den ersten Abschnitt der Oberfläche mit den strömungsleitenden Strukturen auf. In weiteren Ausführungsformen weist der erste Teilbereich eines als axial ausgedehnter Hohl- oder Vollzylinder ausgebildeten zweiten Elements einen geringeren Innen- und Außendurchmesser oder Außendurchmesser als der zweite Teilbereich des zweiten Elements auf. Vorteilhaft sind die Durchmesser des ersten und zweiten Elements aufeinander abgestimmt, so dass die Anordnung des zweiten Elements innerhalb des ersten Elements gewährleistet ist.

Der erste Abschnitt der inneren Oberfläche des ersten Elements und der erste Abschnitt der Oberfläche des zweiten Elements meinen jeweils Abschnitte des ersten und des zweiten Elements, die bei Betrieb des Ventils mit dem Fluidstrom in Kontakt stehen.

In weiteren Ausführungsformen weisen das erste Element auf einem zweiten Abschnitt seiner inneren Oberfläche und das zweite Element auf einem zweiten Abschnitt seiner Oberfläche jeweils hubbegrenzende Strukturen auf. Eine hubbegrenzende Struktur im Sinne der Erfindung meint jegliche Struktur, die geeignet ist, den Ventilhub, d.h. die axiale Bewegbarkeit des zweiten Elements gegenüber dem ersten Element, zu begrenzen. Derart geeignete Strukturen sind bspw. als schiefe Ebenen auf dem ersten und zweiten Element ausgebildet, die eine Verdrehung des ersten Elements gegenüber dem zweiten Element in eine translatorische Bewegung umsetzen In weiteren Ausführungsformen sind die hubbegrenzenden Strukturen des ersten und des zweiten Elements ineinander eingreifend und miteinander korrespondierend ausgebildet. Vorteilhaft wechselwirken derartige hubbegrenzende Strukturen gewindeartig miteinander, um die axiale Bewegbarkeit des zweiten Elements gegenüber dem ersten Element zu begrenzen. In weiteren Ausführungsformen sind die hubbegrenzenden Strukturen des ersten und zweiten Elements als Gewindegänge, bevorzugt als zwei Gewindegänge, ausgebildet. In weiteren Ausführungsformen wird der Hub durch die hubbegrenzenden Strukturen auf einen Bereich von 2 mm bis 4 mm, bevorzugt 2,7 mm, begrenzt.

In Ausführungsformen weist der zweite Bereich des ersten Elements den zweiten Abschnitt der inneren Oberfläche des ersten Elements mit den hubbegrenzenden Strukturen auf. In weiteren Ausführungsformen weist der zweite Teilbereich des zweiten Elements den zweiten Abschnitt der Oberfläche mit den hubbegrenzenden Strukturen auf. Der zweite Abschnitt der inneren Oberfläche des ersten Elements und der zweite Abschnitt der Oberfläche des zweiten Elements meinen jeweils Abschnitte des ersten und des zweiten Elements, die bei Betrieb des Ventils in Kontakt mit dem Fluid stehen.

In weiteren Ausführungsformen ist der Ventilhub mittels eines Stellantriebs begrenzbar. Dies kann erfolgen, indem der Stellantrieb dauerhaft ein Stellsignal, wie eine elektrische Spannung, empfängt, dass zwischen dem Stellsignal für den komplett geöffneten Zustand des Ventils und dem Stellsignal für den komplett geschlossenen Zustand des Ventils liegt. Damit wird vorteilhaft eine Begrenzung des Arbeitsbereiches des Stellantriebs und damit Hubbegrenzung erreicht.

In bevorzugten Ausführungsformen erstreckt sich die mindestens eine Öffnung entlang nahezu 360° des Umfangs des ersten Elements. Vorteilhaft wird dadurch der Durchfluss des Fluidstroms durch das erste Element erreicht.

In weiteren Ausführungsformen erstreckt sich die mindestens eine Öffnung entlang 300° bis 340° des Umfangs des ersten Elements.

In weiteren Ausführungsformen erstreckt sich die mindestens eine Öffnung vollumfänglich entlang des Umfangs des ersten Elements. Vollumfänglich meint dabei, dass sich die mindestens eine Öffnung entlang 85 % bis 95 % des Umfangs des ersten Elements erstreckt.

In bevorzugten Ausführungsformen sind das erste Element und/oder das zweite Element wenigstens einteilig ausgebildet.

In weiteren Ausführungsformen sind das erste und/oder das zweite Element mehrteilig ausgebildet. Dies kann unter fertigungsrelevanten Gesichtspunkten vorteilhaft sein. In Ausführungsformen ist das erste Element zweiteilig ausgebildet. Dabei umfasst vorteilhaft das erste Element einen ersten Teil, der den ersten und zweiten Bereich des ersten Elements umfasst, und einen zweiten Teil, der den dritten Bereich des ersten Elements umfasst. Der erste und der zweite Teil des ersten Elementes sind in Ausführungsformen mittels Fügeverfahren miteinander verbindbar.

In bevorzugten Ausführungsformen weisen das erste und das zweite Element mehrere umlaufende Nuten zur Aufnahme von Dichtmitteln auf. Vorteilhaft wird dadurch die Abdichtung zwischen dem ersten und dem zweiten Element und dem Ventilgehäuse gewährleistet

In Ausführungsformen weist das erste Element vier umlaufende Nuten zur Aufnahme von Dichtmitteln auf. Vorteilhaft wird dadurch die Abdichtung zwischen dem ersten Element und dem Ventilgehäuse erreicht.

In weiteren Ausführungsformen weist das zweite Element zwei umlaufende Nuten zur Aufnahme von Dichtmitteln auf. Vorteilhaft wird dadurch die Abdichtung zwischen dem zweiten und dem ersten Element erreicht.

Ein weiterer Aspekt der Erfindung betrifft einen Ventileinsatz für ein Ventilgehäuse mit mindestens einer Einlass- und einer Auslassseite zur Regelung eines Fluidstroms zwischen der Einlass- und der Auslassseite, umfassend mindestens ein erstes als Hohlkörper ausgebildetes Element und ein zweites Element, wobei das zweite Element innerhalb des ersten Elements angeordnet ist, und der Ventileinsatz derart zur Anordnung in dem Ventilgehäuse ausgebildet ist, so dass das erste Element im Ventilgehäuse axial fixiert und das zweite Element im Ventilgehäuse verdrehsicher angeordnet ist, und wobei das erste Element mindestens eine Öffnung entlang des Umfangs des ersten Elements zum Durchleiten des Fluidstroms aufweist und gegenüber dem zweiten Element verdrehbar ausgebildet ist, und wobei das zweite Element gegenüber dem ersten Element axial bewegbar ausgebildet ist.

Vorteilhaft ermöglicht ein derartiger Ventileinsatz die Voreinstellung eines Maximalwerts der Durchflussmenge und die kontinuierliche Steuerung des Durchflusses zwischen Null und dem voreingestellten Maximalwert. Weiterhin vorteilhaft ist ein erfindungsgemäßer Ventileinsatz in Ventilgehäusen einsetzbar und bietet somit produktionstechnische Flexibilität bei der Funktionalisierung von Ventilgehäusen.

In Ausführungsformen umfasst der Ventileinsatz ein erstes als Hohlzylinder ausgebildetes Element und ein zweites Element. Dabei kann in Ausführungsformen der Innen- und/oder Außendurchmesser des Hohlzylinders entlang der axialen Ausdehnung des Hohlzylinders variieren.

Erfindungsgemäß weist das erste Element auf seiner inneren Oberfläche oder das zweite Element auf seiner Oberfläche strömungsleitende Strukturen auf, wobei die strömungsleitenden Strukturen auf der inneren Oberfläche des ersten Elements oder der Oberfläche des zweiten Elements eingebrachte Vertiefungen und/oder Erhebungen sind. Weiterhin zur Erfindung gehört ein Verfahren zum Betrieb eines Ventils mit einer gleichbleibenden, gleichprozentigen Ventilkennlinie unabhängig von einem voreingestellten Maximalwert der Durchflussmenge, umfassend ein Ventilgehäuse mit mindestens einer Einlass- und einer Auslassseite, und einen Ventileinsatz zur Regelung des Fluidstroms zwischen der Einlass- und der Auslassseite, der innerhalb des Ventilgehäuses angeordnet ist. Erfindungsgemäß umfasst der Ventileinsatz mindestens ein erstes als Hohlkörper ausgebildetes Element und ein zweites Element, wobei das zweite Element innerhalb des ersten Elements angeordnet ist. Weiterhin erfindungsgemäß ist der Ventileinsatz derart innerhalb des Ventilgehäuses angeordnet, dass das erste Element im Ventilgehäuse axial fixiert und das zweite Element im Ventilgehäuse verdrehsicher angeordnet ist. Erfindungsgemäß weist das erste Element mindestens eine Öffnung entlang des Umfangs des ersten Elements zum Durchleiten des Fluidstroms auf und ist gegenüber dem zweiten Element verdrehbar ausgebildet. Weiterhin erfindungsgemäß ist das zweite Element gegenüber dem ersten Element axial bewegbar ausgebildet, wobei das erste Element auf einem ersten Abschnitt seiner inneren Oberfläche oder das zweite Element auf einem ersten Abschnitt seiner Oberfläche strömungsleitende Strukturen aufweist, und die strömungsleitenden Strukturen auf der inneren Oberfläche des ersten Elements oder der Oberfläche des zweiten Elements eingebrachte Vertiefungen und/oder Erhebungen sind. Erfindungsgemäß weist das Verfahren die Schritte: einstellen der Verdrehung des ersten Elements gegenüber dem zweiten Element, um eine Voreinstellung eines Maximalwerts der Durchflussmenge des Fluidstroms zu erzielen, und axiales Bewegen des zweiten Elements gegenüber dem ersten Element, um die Durchflussmenge kontinuierlich zwischen null und dem voreingestellten Maximalwert zu steuern, auf.

Vorteilhaft wird dadurch eine Voreinstellung eines Maximalwerts der Durchflussmenge und die kontinuierliche Steuerung zwischen Null und dem voreingestellten Maximalwert der Durchflussmenge erreicht. Weiterhin vorteilhaft wird dadurch eine bessere Regelgenauigkeitund damit ein höherer thermischer Komfort erzielt. Insbesondere im Teillastbereich wird eine deutlich verbesserte Regelgenauigkeit und eine gleichbleibende Ventilkennlinie bzw. Ventilcharakteristik erzielt.

Ein weiterer Aspekt der Erfindung ist die Verwendung eines erfindungsgemäßen Ventils als Zonenventil oder Einzelraumregelungsventil in Heiz- und/oder Kühlsystemen und/oder zur Durchführung eines erfindungsgemäßen Verfahrens.

Vorteilhaft wird dadurch ein automatischer hydraulischer Abgleich ermöglicht. Dazu wird das erfindungsgemäße Ventil auf die erforderliche Durchflussmenge eingestellt und kompensiert Druckschwankungen in dem Heiz- und/oder Kühlsystem. Weiterhin vorteilhaft wird dadurch die Pumpenleistung innerhalb des Heiz- und/oder Kühlsystems auf ein Minimum reduziert, um unnötigen Energieverbrauch zu vermeiden. Weiterhin vorteilhaft wird dadurch die Voreinstellung eines Maximalwerts der Durchflussmenge und die kontinuierliche Steuerung des Durchflusses zwischen Null und dem voreingestellten Maximalwert ermöglicht.

Ein Zonenventil im Sinne der Erfindung meint ein Ventil, bspw. zur Regelung der Heiz- oder Kühlleistung in Konferenzräumen oder Großraumbüros. Ein Einzelraumregelungsventil im Sinne der Erfindung meint ein Ventil zur Regelung der Heiz- oder Kühlleistung in einem einzelnen Raum.

In Ausführungsformen wird ein erfindungsgemäßes Ventil zur Versorgung von Etagen oder Strängen im Wohnungsbau verwendet.

Ein weiterer Aspekt der Erfindung ist die Verwendung eines erfindungsgemäßen Ventileinsatzes in einem Ventilgehäuse und/oder zur Durchführung eines erfindungsgemäßen Verfahrens.

Für die Realisierung der Erfindung ist es auch zweckmäßig, die vorbeschriebenen Ausführungsformen und Merkmale der Ansprüche zu kombinieren. Die Erfindung ist nicht auf die dargestellten und beschriebenen Ausführungsformen beschränkt, sondern wird durch die beigefügten Ansprüche definiert. Ferner ist die Erfindung auch nicht auf die speziell beschriebenen Merkmalskombinationen beschränkt, sondern kann auch durch jede beliebige andere Kombination von bestimmten Merkmalen aller insgesamt offenbarten Einzelmerkmale definiert sein, sofern sich die Merkmalskombinationen durch die beigefügten Ansprüche abgedeckt sind. Nachfolgend soll die Erfindung anhand einiger Ausführungsbeispiele und zugehöriger Figuren eingehender erläutert werden. Die Ausführungsbeispiele sollen dabei die Erfindung beschreiben, ohne diese zu beschränken.

Dabei zeigen

Fig. 1 eine Ausführungsform eines erfindungsgemäßen Ventils,
Fig. 2 eine Ausführungsform eines erfindungsgemäßen Ventileinsatzes, und
Fig. 3 eine weitere Ausführungsform eines erfindungsgemäßen Ventileinsatzes,
Fig. 4 schematisch die durch die strömungsleitenden Strukturen auf einer Höhenlinie ausgebildete durchströmbare Fläche $A_{eff}$.

## Ausführungsbeispiele

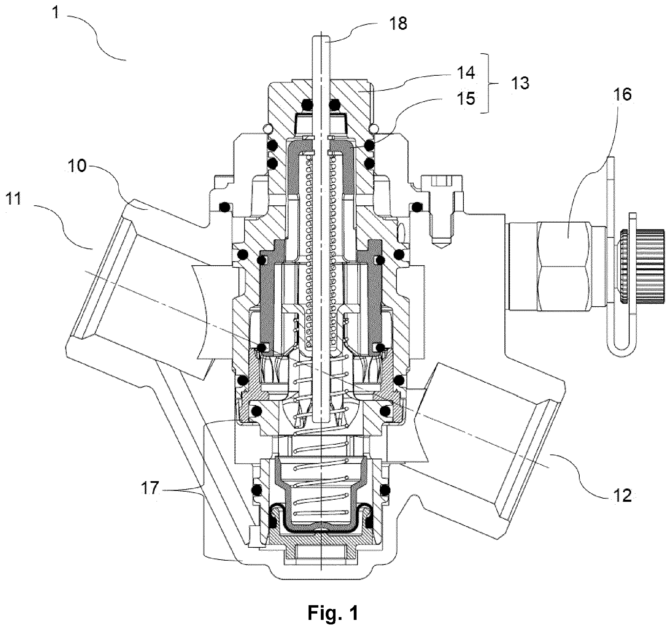

Fig. 1 zeigt eine Ausführungsform eines erfindungsgemäßen Ventils 1. Das Ventil 1 umfasst mindestens ein Ventilgehäuse 10 mit einer Einlass- und einer Auslassseite 11, 12 und einen Ventileinsatz 13. Der Ventileinsatz 13 umfasst mindestens ein erstes als Hohlkörper ausgebildetes Element 14 und ein zweites Element 15, wobei das zweite Element 15 innerhalb des ersten Elements 14 angeordnet ist. Das Ventil 1 weist weiterhin mindestens einen Messanschluss 16 und eine Differenzdruckkompensationseinheit 17 auf. Erkennbar ist auch die Spindel 18, mit der in Ausführungsformen ein Stellantrieb verbunden ist, um das zweite Element 15 gegenüber dem ersten Element 14 axial zu bewegen. Der Ventileinsatz 13 ist derart innerhalb des Ventilgehäuses 10 angeordnet, so dass das erste Element 14 im Ventilgehäuse axial fixiert und das zweite Element 15 verdrehsicher ist. Das erste Element 14 ist gegenüber dem zweiten Element 15 verdrehbar.

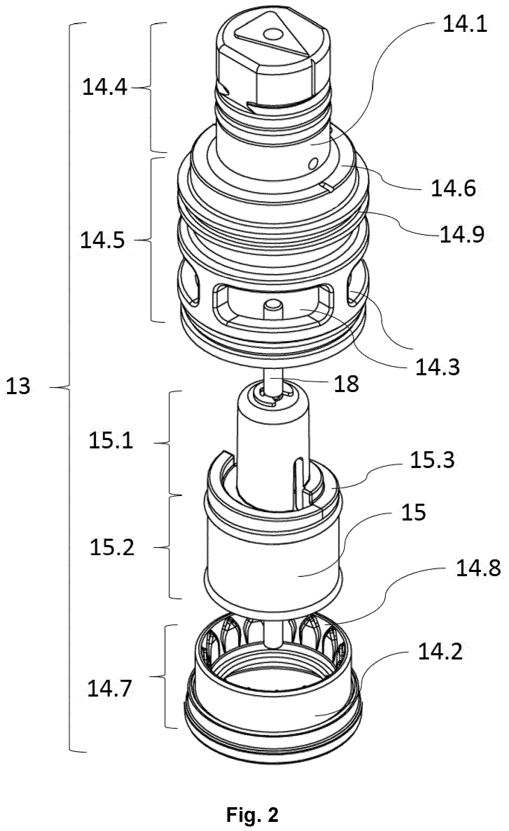

Fig. 2 zeigt eine Ausführungsform eines erfindungsgemäßen Ventileinsatzes 13. Der Ventileinsatz 13 umfasst ein mehrteiliges, als Hohlzylinder ausgebildetes erstes Element 14, welches ein erstes Teil 14.1 und ein zweites Teil 14.2 umfasst, die mittels Fügeverfahren miteinander verbindbar sind, und ein zweites Element 15. Das zweite Element 15 ist innerhalb des ersten Elements 14 angeordnet. Das erste Element 14 weist in einer Ausführungsform vier gleichförmige Öffnungen 14.3 zum Durchleiten eines Fluidstroms auf, die sich entlang nahezu 360° des Umfangs des ersten Elements 14 erstrecken. Innen- und Außendurchmesser des ersten als Hohlzylinder ausgebildeten Elements 14 variieren entlang der axialen Ausdehnung des ersten Elements 14. Das erste Teil 14.1 weist den ersten 14.4 und zweiten Bereich 14.5 des ersten Elements 14 auf, wobei der zweite Bereich 14.5 den zweiten Abschnitt mit den hubbegrenzenden Strukturen 14.6 aufweist. In Fig. 2 ist erkennbar, dass der erste Bereich 14.4 des ersten Elements 14 geringere Durchmesser als der zweite 14.5 und dritte Bereich 14.7 aufweist. Das zweite Teil 14.2 weist den dritten Bereich 14.7 des ersten Elements 14 auf, wobei der dritte Bereich 14.7 den ersten Abschnitt mit den strömungsleitenden Strukturen 14.8 aufweist. Fig. 2 zeigt exemplarisch eine der mehreren umlaufenden Nuten 14.9 zur Aufnahme von Dichtmitteln. Das zweite Element 15 ist als Hohlzylinder ausgebildet, wobei Innen- und Außendurchmesser des Hohlzylinders entlang der axialen Ausdehnung des zweiten Elements 15 variieren. Das zweite Element 15 weist an einer Stirnfläche eine Aussparung zur Durchführung einer Spindel 18 auf. Die Spindel 18 kann mit einem Stellantrieb (nicht gezeigt) verbunden sein. Das zweite Element 15 weist einen ersten 15.1 und einen zweiten 15.2 Teilbereich auf, wobei der Durchmesser des ersten Teilbereichs 15.1 geringer ist als der Durchmesser des zweiten Teilbereichs 15.2. Weiterhin erkennbar sind die hubbegrenzenden Strukturen 15.3 im zweiten Teilbereich 15.2 auf einem zweiten Abschnitt der Oberfläche des zweiten Elements 15. Die hubbegrenzenden Strukturen 14.6, 15.3 sind derart ausgebildet, dass diese gewindeartig miteinander wechselwirken, um die axiale Bewegbarkeit des zweiten Elements 15 gegenüber dem ersten Element 14 zu begrenzen.

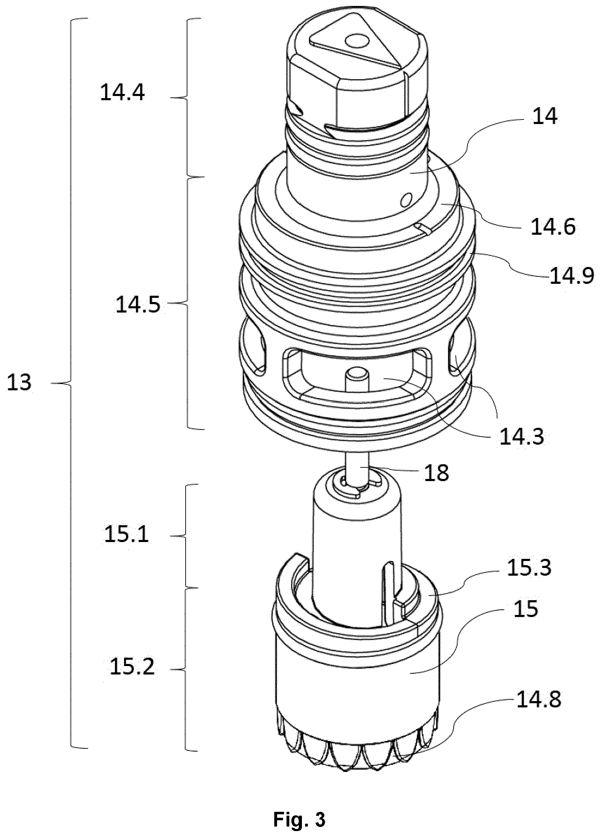

Fig. 3 zeigt eine weitere Ausführungsform eines erfindungsgemäßen Ventileinsatzes 13. Der Ventileinsatz 13 umfasst ein einteiliges, als Hohlzylinder ausgebildetes erstes Element 14, und ein zweites Element 15. Das erste Element 14 weist einen ersten 14.4, einen zweiten 14.5 und einen dritten Bereich 14.7 auf. In Fig. 3 ist erkennbar, dass der erste Bereich 14.4 des ersten Elements 14 geringere Durchmesser als der zweite 14.5 und dritte Bereich 14.7 aufweist. Das zweite Element 15 ist innerhalb des ersten Elements 14 angeordnet. Das erste Element 14 weist in einer Ausführungsform vier gleichförmige Öffnungen 14.3 zum Durchleiten eines Fluidstroms auf, die sich entlang nahezu 360° des Umfangs des ersten Elements erstrecken. Innen- und Außendurchmesser des ersten als Hohlzylinder ausgebildeten Elements 14 variieren entlang der axialen Ausdehnung des ersten Elements 14. Das erste Element 14 weisteinen zweiten Abschnitt seiner inneren Oberfläche mit hubbegrenzenden Strukturen 14.6 auf. Fig. 3 zeigt exemplarisch eine der mehreren umlaufenden Nuten 14.9 zur Aufnahme von Dichtmitteln. Das zweite Element 15 ist als Hohlzylinder ausgebildet, wobei der Innen- und Außendurchmesser des Hohlzylinders entlang der axialen Ausdehnung des zweiten Elements 15 variieren. Das zweite Element 15 weist einen ersten 15.1 und einen zweiten 15.2 Teilbereich auf, wobei der Durchmesser des ersten Teilbereichs 15.1 geringer ist als der Durchmesser des zweiten Teilbereichs 15.2. Der zweite Teilbereich 15.2 umfasst einen zweiten Abschnitt der Oberfläche des zweiten Elements 15 mit hubbegrenzenden Strukturen 15.3. Die hubbegrenzenden Strukturen 14.6, 15.3 sind derart ausgebildet, dass diese gewindeartig miteinander wechselwirken, um die axiale Bewegbarkeit des zweiten Elements 15 gegenüber dem ersten Element 14 zu begrenzen. Das zweite Element 15 weist an einer Stirnfläche eine Aussparung zur Durchführung einer Spindel 18 auf. Die Spindel 18 kann mit einem Stellantrieb (nicht gezeigt) verbunden sein. Ebenfalls erkennbar sind in Fig. 3 die strömungsleitenden Strukturen 15.4 auf einem ersten Abschnitt der Oberfläche des zweiten Elements, wobei der erste Abschnitt vom zweiten Teilbereich 15.2 umfasst ist.

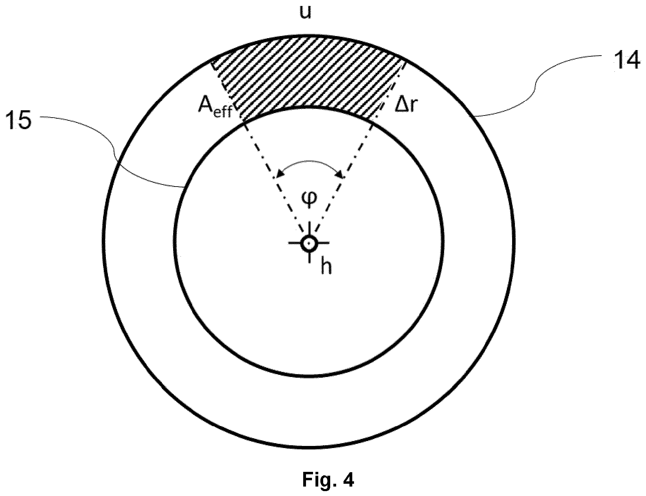

Fig. 4 zeigt schematisch eine Draufsicht entlang einer axialen Richtung auf das erste 14 und das zweite Element 15 und die ausbildendende durchströmbare Fläche $A_{eff}$ auf einer Höhenlinie. Dabei kennzeichnet $\Delta r$ einen radialen Öffnungsspalt und u eine Umfangslänge. Der radiale Öffnungsspalt bildet sich entlang einer radialen Richtung des Ventils zwischen dem ersten 14 und dem zweiten Element 15 und wird durch die innere Oberfläche des ersten Elements 14 und die Oberfläche des zweiten Elements 15 entlang einer Höhenlinie begrenzt. Die radiale Richtung ist dabei senkrecht zur axialen Richtung oder zur Ventilachse ausgerichtet. Die Umfangslänge u der Vertiefungen der strömungsleitenden Strukturen ist die Ausdehnung der Vertiefungen entlang des Umfangs des ersten 14 oder zweiten Elements 15 auf einer Höhenlinie.

**Bezugzeichen**

1       Ventil

10      Ventilgehäuse

11      Einlassseite

| 12 | Auslassseite |
|----|-----|
| 13 | Ventileinsatz |
| 14 | Erstes Element |
| 14.1 | Erstes Teil des ersten Elements |
| 14.2 | Zweites Teil des ersten Elements |
| 14.3 | Mindestens eine Öffnung |
| 14.4 | Erster Bereich des ersten Elements |
| 14.5 | Zweiter Bereich des ersten Elements |
| 14.6 | Hubbegrenzende Strukturen auf der inneren Oberfläche des ersten Elements |
| 14.7 | Dritter Bereich des ersten Elements |
| 14.8 | Strömungsleitende Strukturen |
| 14.9 | Umlaufende Nut |
| 15 | Zweites Element |
| 15.1 | Erster Teilbereich des zweiten Elements |
| 15.2 | Zweiter Teilbereich des zweiten Elements |
| 15.3 | Hubbegrenzende Struktur auf der Oberfläche des zweiten Elements |
| 16 | Messanschluss |
| 17 | Differenzdruckkompensationseinheit |
| 18 | Spindel |

**Patentansprüche**

1. Ventil (1) zum Steuern eines Fluidstroms, umfassend mindestens:
ein Ventilgehäuse (10) mit mindestens einer Einlass- (11) und einer Auslassseite (12), und einen Ventileinsatz (13) zur Regelung des Fluidstroms zwischen der Einlass- (11) und der Auslassseite (12), der innerhalb des Ventilgehäuses (10) angeordnet ist, wobei der Ventileinsatz (13) mindestens ein erstes als Hohlkörper ausgebildetes Element (14) und ein zweites Element (15) umfasst, und wobei das zweite Element (15) innerhalb des ersten hohlkörperförmigen Elements (14) angeordnet ist, und wobei der Ventileinsatz (13) derart innerhalb des Ventilgehäuses (10) angeordnet ist, dass das erste Element (14) im Ventilgehäuse (10) axial fixiert und das zweite Element (15) im Ventilgehäuse (10) verdrehsicher angeordnet ist, und wobei das erste Element (14) mindestens eine Öffnung (14.3) entlang des Umfangs des ersten Elements (14) zum Durchleiten des Fluidstroms aufweist und gegenüber dem zweiten Element (15) verdrehbar ausgebildet ist, und wobei das zweite Element (15) gegenüber dem ersten Element (14) axial bewegbar ausgebildet ist, wobei das erste Element (14) auf einem ersten Abschnitt seiner inneren Oberfläche oder das zweite Element (15) auf einem ersten Abschnitt seiner Oberfläche strömungsleitende Strukturen (14.8) aufweist, **dadurch gekennzeichnet, dass** die strömungsleitenden Strukturen (14.8) auf der inneren Oberfläche des ersten Elements oder der Oberfläche des zweiten Elements eingebrachte Vertiefungen und/oder Erhebungen sind.

2. Ventil (1) nach Anspruch 1, **dadurch gekennzeichnet, dass** das Ventil (1) weiterhin eine Differenzdruckkompensationseinheit (17) umfasst.

3. Ventil (1) nach Anspruche 1 oder 2, **dadurch gekennzeichnet, dass** sich die mindestens eine Öffnung (14.3) entlang nahezu 360° des Umfangs des ersten Elements (14) erstreckt.

4. Ventil (1) nach einem der Ansprüche 1 bis 3, **dadurch gekennzeichnet, dass** das erste Element (14) und/oder das zweite Element (15) wenigstens einteilig ausgebildet ist.

5. Ventil (1) nach einem der Ansprüche 1 bis 4, **dadurch gekennzeichnet, dass** das erste (14) und das zweite Element (15) mehrere umlaufende Nuten (14.9) zur Aufnahme von Dichtmitteln aufweisen.

6. Ventileinsatz (13) für ein Ventilgehäuse (10) mit mindestens einer Einlass- (11) und einer Auslassseite (12) zur Regelung eines Fluidstroms zwischen der Einlass- (11) und der Auslassseite (12), umfassend mindestens

  - ein erstes als Hohlkörper ausgebildetes Element (14) und
  - ein zweites Element (15),

wobei das zweite Element (15) innerhalb des ersten Elements (14) angeordnet ist, und der Ventileinsatz (13) derart zur Anordnung in dem Ventilgehäuse (10) ausgebildet ist, so dass das erste Element (14) im Ventilgehäuse (10) axial fixiert und das zweite Element (15) im Ventilgehäuse (10) verdrehsicher angeordnet ist, und wobei das erste Element (14) mindestens eine Öffnung (14.3) entlang des Umfangs des ersten Elements (14) zum Durchleiten des Fluidstroms aufweist und gegenüber dem zweiten Element (15) verdrehbar ausgebildet ist, und wobei das zweite Element (15) gegenüber dem ersten Element (14) axial bewegbar ausgebildet ist, wobei das erste Element (14) auf einem ersten Abschnitt seiner inneren Oberfläche oder das zweite Element (15) auf einem ersten Abschnitt seiner Oberfläche strömungsleitende Strukturen (14.8) aufweist, **dadurch gekennzeichnet, dass** die strömungsleitenden Strukturen (14.8) auf der inneren Oberfläche des ersten Elements oder der Oberfläche des zweiten Elements eingebrachte Vertiefungen und/oder Erhebungen sind.

7. Verfahren zum Betrieb eines Ventils (1) mit einer gleichbleibenden, gleichprozentigen Ventilkennlinie unabhängig von einem voreingestellten Maximalwert der Durchflussmenge, umfassend ein Ventilgehäuse (10) mit mindestens einer Einlass- (11) und einer Auslassseite (12),und einen Ventileinsatz (13) zur Regelung eines Fluidstroms zwischen der Einlass- (11) und der Auslassseite (12), der innerhalb des Ventilgehäuses (10) angeordnet ist, wobei der Ventileinsatz (13) mindestens ein erstes als Hohlkörper ausgebildetes Element (14) und ein zweites Element (15) umfasst, und wobei das zweite Element (15) innerhalb des ersten Elements (14) angeordnet ist, und wobei der Ventileinsatz (13) derart innerhalb des Ventilgehäuses (10) angeordnet ist, dass das erste Element (14) im Ventilgehäuse (10) axial fixiert und das zweite Element (15) im Ventilgehäuse (10) verdrehsicher angeordnet ist, und wobei das erste Element (14) mindestens eine Öffnung (14.3) entlang des Umfangs des ersten Elements (14) zum Durchleiten des Fluidstroms aufweist und gegenüber dem zweiten Element (15) verdrehbar ausgebildet ist, und wobei das zweite Element (15) gegenüber dem ersten Element (14) axial bewegbar ausgebildet ist, wobei das erste Element (14) einem ersten Abschnitt seiner inneren Oberfläche oder das zweite Element (15) auf einem ersten Abschnitt seiner Oberfläche strömungsleitende Strukturen (14.8) aufweist, und die strömungsleitenden Strukturen (14.8) auf der inneren Oberfläche des ersten Elements oder der Oberfläche des zweiten Elements eingebrachte Vertiefungen und/oder Erhebungen sind;
aufweisend die Schritte,

  • Einstellen der Verdrehung des ersten Elements (14) gegenüber dem zweiten Element (15), um eine Voreinstellung eines Maximalwerts der Durchflussmenge des Fluidstroms zu erzielen,
  • axiales Bewegen des zweiten Elements (15) gegenüber dem ersten Element (14), um die Durchflussmenge kontinuierlich zwischen null und dem voreingestellten Maximalwert zu steuern.

8. Verwendung eines Ventils (1) nach einem der Ansprüche 1 bis 5 als Zonenventil oder Einzelraumregelungsventil in Heiz- und/oder Kühlsystemen und/oder zur Durchführung eines Verfahrens nach Anspruch 7.

9. Verwendung eines Ventileinsatzes (13) nach Anspruch 6 in einem Ventilgehäuse und/oder zur Durchführung eines Verfahrens nach Anspruch 7.

**Claims**

1. Valve (1) for controlling a fluid flow, comprising at least:

a valve housing (10) with at least one inlet side (11) and one outlet side (12), and a valve insert (13) for controlling the fluid flow between the inlet side (11) and the outlet side (12), which is arranged within the valve housing (10), wherein the valve insert (13) comprises at least a first element (14) in the form of a hollow body and a second element (15) and wherein the second element (15) is arranged within the first hollow body-shaped element (14), and wherein the valve insert (13) is arranged within the valve housing (10) in such a way that the first element (14) is axially fixed in the valve housing (10) and the second element (15) is arranged in the valve housing (10) so as to be secured against rotation, and wherein the first element (14) has at least one opening (14.3) along the circumference of the first element (14) for passing the fluid flow and is designed to be rotatable relative to the second element (15), and wherein the second element (15) is designed to be axially movable relative to the first element (14), wherein the first element (14) on a first section of its inner surface or the second element (15) on a first section of its surface has flow-guiding structures (14.8), **characterised in that** the flow-guiding structures (14.8) are depressions and/or elevations incorporated on the inner surface of the first element or the surface of the second element.

2. Valve (1) according to claim 1, **characterised in that** the valve (1) further comprises a differential pressure compensation unit (17).

3. Valve (1) according to claims 1 or 2, **characterised in that** the at least one opening (14.3) extends along almost 360° of the circumference of the first element (14).

4. Valve (1) according to one of claims 1 to 3, **characterised in that** the first element (14) and/or the second element (15) is formed in at least one piece.

5. Valve (1) according to one of claims 1 to 4, **characterised in that** the first (14) and the second element (15) have a plurality of circumferential grooves (14.9) for receiving sealing means.

6. Valve insert (13) for a valve housing (10) with at least one inlet side (11) and one outlet side (12) for regulating a fluid flow between the inlet side (11) and the outlet side (12), comprising at least

   - a first element (14) designed as a hollow body and
   - a second element (15),

   wherein the second element (15) is arranged within the first element (14), and the valve insert (13) is designed for arrangement in the valve housing (10) in such a way that the first element (14) is axially fixed in the valve housing (10) and the second element (15) is arranged in the valve housing (10) so as to be secured against rotation, and wherein the first element (14) has at least one opening (14.3) along the circumference of the first element (14) for passing the fluid flow and is designed to be rotatable relative to the second element (15), and wherein the second element (15) is designed to be axially movable relative to the first element (14), wherein the first element (14) has flow-conducting structures (14.8) on a first section of its surface or the second element (15) has flow-conducting structures (14.8) on a first section of its surface, **characterised in that** the flow-guiding structures (14.8) are depressions and/or elevations incorporated on the inner surface of the first element or the surface of the second element.

7. Method for operating a valve (1) with a constant, equal percentage valve characteristic independent of a preset maximum value of the flow rate, comprising a valve housing (10) with at least one inlet side (11) and one outlet side (12), and a valve insert (13) for regulating a fluid flow between the inlet side (11) and the outlet side (12), which is arranged inside the valve housing (10), wherein the valve insert (13) comprises at least a first element (14) designed as a hollow body and a second element (15), and wherein the second element (15) is arranged inside the first element (14), and wherein the valve insert (13) is arranged inside the valve housing (10) in such a way that the first element (14) is axially fixed in the valve housing (10) and the second element (15) is arranged in the valve housing (10) so as to be secured against rotation, and wherein the first element (14) has at least one opening (14.3) along the circumference of the first element (14) for passing the fluid flow and is designed to be rotatable relative to the second element (15), and wherein the second element (15) is designed to be axially movable relative to the first element (14), wherein the first element (14) has flow-guiding structures (14.8) on a first section of its inner surface or the second element (15) has flow-guiding structures (14.8) on a first section of its surface, and the flow-guiding structures (14.8) are depressions and/or elevations incorporated on the inner surface of the first element or the surface of the second element; comprising the steps of

   • adjusting the rotation of the first element (14) with respect to the second element (15) to obtain a presetting of a maximum value of the flow rate of the fluid flow

• axially moving the second element (15) relative to the first element (14) to continuously control the flow rate between zero and the preset maximum value.

8. Use of a valve (1) according to any one of claims 1 to 5 as a zone valve or individual room control valve in heating and/or cooling systems and/or for carrying out a method according to claim 7.

9. Use of a valve insert (13) according to claim 6 in a valve housing and/or for carrying out a method according to claim 7.

**Revendications**

1. Vanne (1) pour contrôler un courant de fluide, comprenant au moins :
un boîtier de vanne (10) avec au moins un côté d'entrée (11) et un côté de sortie (12), et un insert de vanne (13) pour la régulation du courant de fluide entre le côté d'entrée (11) et le côté de sortie (12), qui est disposé à l'intérieur du boîtier de vanne (10), l'insert de vanne (13) comprenant au moins un premier élément (14) réalisé sous forme de corps creux et un deuxième élément (15), et le deuxième élément (15) étant disposé à l'intérieur du premier élément (14) en forme de corps creux, et l'insert de vanne (13) étant disposé à l'intérieur du boîtier de vanne (10) de telle sorte que le premier élément (14) est fixé axialement dans le boîtier de vanne (10) et le deuxième élément (15) est disposé dans le boîtier de vanne (10) de manière à ne pas pouvoir tourner, et le premier élément (14) présentant au moins une ouverture (14.3) le long de la périphérie du premier élément (14) pour le passage du courant de fluide et est conçu de manière à pouvoir tourner par rapport au deuxième élément (15), et le deuxième élément (15) est conçu de manière à pouvoir se déplacer axialement par rapport au premier élément (14), le premier élément (14) présentant sur une première partie de sa surface intérieure ou le deuxième élément (15) présentant sur une première partie de sa surface des structures de guidage d'écoulement (14.8), **caractérisé en ce que** les structures de guidage d'écoulement (14.8) sont des creux et/ou des bosses formés sur la surface intérieure du premier élément ou sur la surface du deuxième élément.

2. Vanne (1) selon la revendication 1, **caractérisée en ce que** la vanne (1) comprend en outre une unité de compensation de pression différentielle (17).

3. Vanne (1) selon les revendications 1 ou 2, **caractérisée en ce que** ladite au moins une ouverture (14.3) s'étend le long de presque 360° de la circonférence dudit premier élément (14).

4. Vanne (1) selon l'une des revendications 1 à 3, **caractérisée en ce que** le premier élément (14) et/ou le deuxième élément (15) est formé au moins d'une seule pièce.

5. Vanne (1) selon l'une des revendications 1 à 4, **caractérisée en ce que** le premier (14) et le deuxième élément (15) présentent plusieurs rainures périphériques (14.9) destinées à recevoir des moyens d'étanchéité.

6. Insert de vanne (13) pour un boîtier de vanne (10) avec au moins un côté d'entrée (11) et un côté de sortie (12) pour la régulation d'un courant de fluide entre le côté d'entrée (11) et le côté de sortie (12), comprenant au moins

   - un premier élément (14) conçu comme un corps creux et
   - un deuxième élément (15),

le deuxième élément (15) étant disposé à l'intérieur du premier élément (14), et l'insert de vanne (13) étant conçu pour être disposé dans le boîtier de vanne (10) de telle sorte que le premier élément (14) soit fixé axialement dans le boîtier de vanne (10) et que le deuxième élément (15) soit disposé dans le boîtier de vanne (10) de manière à ne pas pouvoir tourner, et le premier élément (14) présentant au moins une ouverture (14.3) le long de la périphérie du premier élément (14) pour le passage du courant de fluide et est conçu de manière à pouvoir tourner par rapport au deuxième élément (15), et le deuxième élément (15) est conçu de manière à pouvoir se déplacer axialement par rapport au premier élément (14), le premier élément (14) présentant sur une première partie de sa surface intérieure ou le deuxième élément (15) présentant sur une première partie de sa surface des structures de guidage d'écoulement (14.8), **caractérisé en ce que** les structures de guidage d'écoulement (14.8) sont des creux et/ou des bosses incorporés sur la surface intérieure du premier élément ou sur la surface du deuxième élément.

7. Procédé pour faire fonctionner une vanne (1) avec une caractéristique de vanne constante, à pourcentage égal, indépendamment d'une valeur maximale préréglée du débit, comprenant un boîtier de vanne (10) avec au moins un côté d'entrée (11) et un côté de sortie (12), et un insert de vanne (13) pour réguler un courant de fluide entre le côté d'entrée (11) et le côté de sortie (12), qui est disposé à l'intérieur du boîtier de vanne (10), l'insert de vanne (13) comprenant au moins un premier élément (14) réalisé sous forme de corps creux et un deuxième élément (15), et le deuxième élément (15) étant disposé à l'intérieur du premier élément (14), et l'insert de vanne (13) étant disposé à l'intérieur du boîtier de vanne (10) de telle sorte que le premier élément (14) est fixé axialement dans le boîtier de vanne (10) et que le deuxième élément (15) est disposé dans le boîtier de vanne (10) de manière à ne pas pouvoir tourner, et le premier élément (14) présentant au moins une ouverture (14. 3) le long de la périphérie du premier élément (14) pour le passage du courant de fluide et étant réalisé de manière à pouvoir tourner par rapport au deuxième élément (15), et le deuxième élément (15) étant réalisé de manière à pouvoir se déplacer axialement par rapport au premier élément (14), le premier élément (14) présentant sur une première partie de sa surface intérieure ou le deuxième élément (15) présentant sur une première partie de sa surface des structures de guidage d'écoulement (14.8), et les structures de guidage d'écoulement (14.8) étant des creux et/ou des bosses formés sur la surface intérieure du premier élément ou sur la surface du second élément ; comprenant les étapes consistant à ,

- régler la torsion du premier élément (14) par rapport au deuxième élément (15) afin d'obtenir un préréglage d'une valeur maximale du débit du courant de fluide,
- déplacer axialement le deuxième élément (15) par rapport au premier élément (14) afin de contrôler en continu le débit entre zéro et la valeur maximale préréglée.

**8.** Utilisation d'une vanne (1) selon l'une des revendications 1 à 5 comme vanne de zone ou vanne de régulation pièce par pièce dans des systèmes de chauffage et/ou de refroidissement et/ou pour la mise en œuvre d'un procédé selon la revendication 7.

**9.** Utilisation d'un insert de vanne (13) selon la revendication 6 dans un boîtier de vanne et/ou pour la mise en œuvre d'un procédé selon la revendication 7.

**Fig. 1**

**Fig. 2**

**Fig. 3**

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 3163135 A1
- EP 3163136 A1
- EP 2089649 B1
- EP 1896755 B1
- EP 2338093 B1
- WO 0188418 A1
- EP 3627015 A1